# EUROPEAN PATENT APPLICATION

(11) **EP 4 783 417 A1**
(43) Date of publication of application: **29.07.2026**
(21) Application number: 25180500.8
(22) Date of filing: 03.06.2025
(51) Int. Cl.: H02K 1/14, H02K 1/18, H02K 16/02

(54) **STATOR ASSEMBLY AND STATOR MECHANISM**

(30) Priority: 22.01.2025 CN 202510099861
(71) Applicant: Delta Electronics, Inc., Taoyuan City 33341 (TW)
(72) Inventor: HUANG, Kuan Lin, Taoyuan City (TW); HUANG, Hsin-Yi, Taoyuan City (TW); HSU, Tzu-Ting, Taoyuan City (TW); SHEU, Hong-Cheng, Taoyuan City (TW)
(74) Representative: 2K Patent Partnerschaft mbB

(57) **Abstract**

A stator assembly (100) includes a core member (108), a bracket assembly (103), a first winding assembly (106) and a second winding assembly (110). The core member (108) has a first groove (1081) and a second groove (1082). The bracket assembly (103) includes a first fixed bracket (104) and a second fixed bracket (105). The first fixed bracket (104) is disposed on a first side (SS1) of the core member (108) and has a first engaging structure (1041) that engages with the first groove (1081). The second fixed bracket (105) is disposed on a second side (SS2) of the core member (108) and has a second engaging structure (1051) that engages with the second groove (1082). The first winding assembly (106) is wound around a third side (SS3) of the core member (108). The second winding assembly (110) is wound around a fourth side (SS4) of the core member (108). The first winding assembly (106) and the second winding assembly (110) are arranged along a first axis (AX1).

## Description

### CROSS REFERENCE TO RELATED APPLICATIONS

This application claims the benefit of China Patent Application No. 202510099861.8, filed on January 22, 2025, the entirety of which is incorporated by reference herein.

### BACKGROUND OF THE INVENTION

### Field of the Disclosure

The present disclosure relates to a stator assembly and a stator mechanism, and more particularly it relates to a stator assembly and a stator mechanism having a reinforced structure.

### Description of the Related Art

Machines equipped with electric motors have become widely used and practical in a number of different industries.

Generally, electric motors can be classified into radial flux motors and axial flux motors, depending on the direction of the magnetic field. Typically, axial flux motors exhibit better performance than radial flux motors under the same size constraints.

However, the stator and rotor of an axial flux motor are usually implemented in a disc-shaped structure. This design requires higher connection strength between the stator and rotor, as well as more precise stator positioning, to ensure the stability of the axial flux motor during operation.

Therefore, how to design a stator mechanism with enhanced structural strength and high positioning accuracy is a topic nowadays that needs to be discussed and solved.

### BRIEF SUMMARY OF THE INVENTION

Accordingly, one objective of the present disclosure is to provide a stator assembly and a stator mechanism to solve the above problems.

According to some embodiments of the disclosure, a stator assembly includes a core member, a bracket assembly, a first winding assembly, and a second winding assembly. The core member has a first groove and a second groove. The bracket assembly includes a first fixed bracket and a second fixed bracket. The first fixed bracket is disposed on the first side of the core member and has a first engaging structure that engages with the first groove. The second fixed bracket is disposed on the second side of the core member and has a second engaging structure that engages with the second groove. The first winding assembly is wound around the third side of the core member. The second winding assembly is wound around the fourth side of the core member. The first winding assembly and the second winding assembly are arranged along the first axis.

According to some embodiments, the stator assembly includes a first insulating element, which is sleeved on the core member and has a first slot and a second slot, which respectively correspond to the first groove and the second groove.

According to some embodiments, the stator assembly includes a second insulating element, which is sleeved on the first insulating element and the core member and has a first covering portion and a second covering portion, wherein the first covering portion is movably connected to the second covering portion, and a separating space is formed between the first covering portion and the second covering portion.

According to some embodiments, the first engaging structure is configured to pass through the separating space and the first slot and then to be inserted into the first groove, and the second engaging structure is configured to pass through the separating space and the second slot and then to be inserted into the second groove.

According to some embodiments, the first covering portion has a first upper bent portion and a second upper bent portion, the first upper bent portion is disposed between the first fixed bracket and the first winding assembly, and the second upper bent portion is disposed between the second fixed bracket and the first winding assembly.

According to some embodiments, the second covering portion has a first lower bent portion and a second lower bent portion, the first lower bent portion is disposed between the first fixed bracket and the second winding assembly, and the second lower bent portion is disposed between the second fixed bracket and the second winding assembly.

According to some embodiments, the stator assembly includes a third insulating element, a fourth insulating element, a fifth insulating element and a sixth insulating element. The third insulating element and the fourth insulating element are wound around the first winding assembly. The fifth insulating element and a sixth insulating element are wound around the second winding assembly. The third insulating element and the fourth insulating element are respectively located on the first side and the second side, and the fifth insulating element and the sixth insulating element are respectively located on the first side and the second side.

According to some embodiments, the third side and the fourth side are arranged opposite to each other along the first axis, the first side and the second side are arranged along the second axis, and the first axis is perpendicular to the second axis.

According to some embodiments, the first fixed bracket is formed with a first opening which is located on the first side, and when viewed along the second axis, a portion of the second insulating element is exposed from the first opening, wherein the first axis is perpendicular to the second axis.

According to some embodiments, the second fixed bracket is formed with a second opening which is located on the second side, and when viewed along the second axis, another portion of the second insulating element is exposed from the second opening.

According to some embodiments, the first fixed bracket and the second fixed bracket cooperatively form a third opening, and the third opening is connected to the first opening and the second opening.

According to some embodiments, the first engaging structure includes a first engaging base portion, a first front engaging protruding portion and a first rear engaging protruding portion, and the first front engaging protruding portion and the first rear engaging protruding portion protrude from the first engaging base portion in a first direction and are configured to be engaged with the front side and the rear side of the core member.

According to some embodiments, the second engaging structure has a second engaging base portion, a second front engaging protruding portion and a second rear engaging protruding portion, and the second front engaging protruding portion and the second rear engaging protruding portion protrude from the second engaging base portion in a second direction and are configured to be engaged with the front side and the rear side of the core member, wherein the second direction is opposite to the first direction.

A stator mechanism includes a housing and a plurality of stator assemblies. The housing has a ring-shaped structure. The plurality of stator assemblies are disposed in the housing and arranged close to each other along the circumferential direction of the housing. Each stator assembly includes a core member, a bracket assembly, a first winding assembly, and a second winding assembly. The core member includes a first groove and a second groove. The bracket assembly includes a first engaging structure and a second engaging structure, respectively located on the first side and the second side of the core member. The first engaging structure and the second engaging structure are configured to engage with the first groove and the second groove. The first winding assembly is wound around the third side of the core member. The second winding assembly is wound around the fourth side of the core member. The third side and the fourth side are arranged relative to each other along the first axis, the first side and the second side are arranged along the second axis, and the first axis is perpendicular to the second axis.

According to some embodiments, the housing defines a central axis, the bracket assembly includes a first stopping portion and a second stopping portion, extending along the direction of the central axis, wherein the housing further includes a plurality of third stopping portions and a plurality of fourth stopping portions, respectively corresponding to the first stopping portions and the second stopping portions, to limit the positions of the stator assemblies.

According to some embodiments, the stator mechanism includes a first positioning member and a second positioning member, wherein the bracket assembly further includes a plurality of first positioning portions and a plurality of second positioning portions extending along the direction of the central axis, wherein the first positioning member and the second positioning member are configured to position the stator assemblies by engaging with the first positioning portions and the second positioning portions.

According to some embodiments, the first positioning member further includes a plurality of third positioning portions configured to be coupled to the first positioning portions, and the second positioning member further includes a plurality of fourth positioning portions configured to be coupled to the second positioning portions.

According to some embodiments, the thermal shrink fitting process is performed to the housing, the stator assemblies are evenly arranged in the housing along the circumferential direction, and there is a gap between each stator assembly and another adjacent stator assembly.

According to some embodiments, after the thermal shrink fitting process is performed to the housing, the housing shrinks toward a center of the circle of the housing to drive the stator assemblies to move toward the center of the circle so that each of the bracket assemblies is in contact with the other two adjacent bracket assemblies.

According to some embodiments, the bracket assembly further includes a first fixed bracket and a second fixed bracket, which are detachably fixed to the first side and the second side of the core member, respectively.

The present disclosure provides a stator mechanism, including a housing and a plurality of stator assemblies. The stator assemblies are disposed in the housing and arranged along the circumferential direction of the ring-shaped housing. Each stator assembly may have a core member and a bracket assembly. The core member may be made of soft magnetic material and has a first groove and a second groove. The bracket assembly includes a first fixed bracket and a second fixed bracket, respectively having a first engaging structure and a second engaging structure which are configured to be respectively engaged with the first groove and the second groove so as to fix the core member.

Furthermore, the stator assembly further includes a first insulating element and a second insulating element. The first insulating element is sleeved on the core member, and the second insulating element is sleeved on the first insulating element and the core member. Therefore, when the first winding assembly and the second winding assembly are disposed on the core member, the first winding assembly and the second winding assembly may be insulated from the bracket assembly, and the first winding assembly may also be prevented from directly contacting the second winding assembly.

In addition, because the stator assemblies each have a fan-shaped structure and are close to each other, when the ring-shaped housing is heated and shrunk, each stator assembly moves toward the center of the circle of the housing and contacts the other two adjacent stator assemblies. Because the bracket assemblies of the stator assemblies may be made of metal, the friction between the stator assemblies is relatively high, so that after the stator assemblies come into contact with the adjacent stator assemblies, the stator assemblies can be firmly positioned due to the friction.

### BRIEF DESCRIPTION OF THE DRAWINGS

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.
FIG. 1 is an exploded perspective view of a stator mechanism 10 according to an embodiment of the present disclosure.
FIG. 2 is a perspective sectional view of the stator mechanism 10 along line A-A in FIG. 1 according to an embodiment of the present disclosure.
FIG. 3 is a perspective schematic view of a stator assembly 100 according to an embodiment of the present disclosure.
FIG. 4 is an exploded diagram of the stator assembly 100 according to an embodiment of the present disclosure.
FIG. 5 is a perspective sectional view of the stator assembly 100 along line B-B in FIG. 3 according to an embodiment of the present disclosure.
FIG. 6 is a top view of a first fixed bracket 104 and a second fixed bracket 105 according to an embodiment of the present disclosure.
FIG. 7 is a perspective schematic view of a second insulating element 114 in a fold state according to an embodiment of the present disclosure.
FIG. 8A is a top view of a partial structure of the stator mechanism 10 according to an embodiment of the present disclosure.
FIG. 8B is a top view showing that the multiple stator assemblies 100 are driven by the housing 12 to move to contact with each other according to an embodiment of the present disclosure.

### DETAILED DESCRIPTION OF THE INVENTION

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over or on a second feature in the description that follows may include embodiments in which the first and second features are in direct contact, and may also include embodiments in which additional features may be disposed between the first and second features, such that the first and second features may not be in direct contact.

In addition, the present disclosure may repeat reference numerals and/or letters in the various examples. This repetition is for the purpose of simplicity and clarity and does not in itself dictate a relationship between the various embodiments and/or configurations discussed. Moreover, the formation of a feature on, connected to, and/or coupled to another feature in the present disclosure that follows may include embodiments in which the features are in direct contact, and may also include embodiments in which additional features may be disposed interposing the features, such that the features may not be in direct contact. In addition, spatially relative terms, for example, "vertical," "above," "over," "below,", "bottom," etc. as well as derivatives thereof (e.g., "downwardly," "upwardly," etc.) are used in the present disclosure for ease of description of one feature's relationship to another feature. The spatially relative terms are intended to cover different orientations of the device, including the features.

Unless defined otherwise, all technical and scientific terms used herein have the same meaning as commonly understood by one of ordinary skill in the art to which this disclosure belongs. It should be appreciated that each term, which is defined in a commonly used dictionary, should be interpreted as having a meaning conforming to the relative skills and the background or the context of the present disclosure, and should not be interpreted in an idealized or overly formal manner unless defined otherwise.

Use of ordinal terms such as "first", "second", etc., in the claims to modify a claim element does not by itself connote any priority, precedence, or order of one claim element over another or the temporal order in which acts of a method are performed, but are used merely as labels to distinguish one claim element having a certain name from another element having the same name (but for use of the ordinal term) to distinguish the claim elements.

In addition, in some embodiments of the present disclosure, terms concerning attachments, coupling and the like, such as "connected" and "interconnected", refer to a relationship wherein structures are secured or attached to one another either directly or indirectly through intervening structures, as well as both movable or rigid attachments or relationships, unless expressly described otherwise.

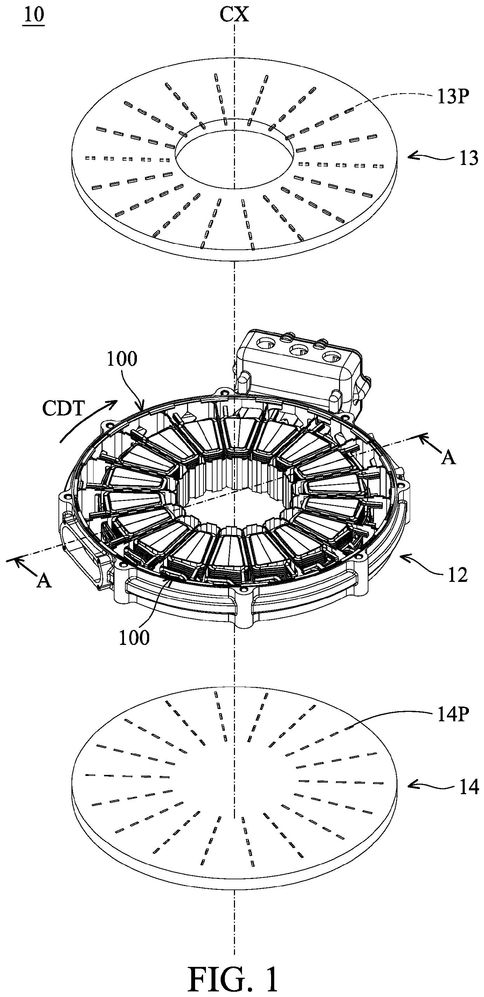

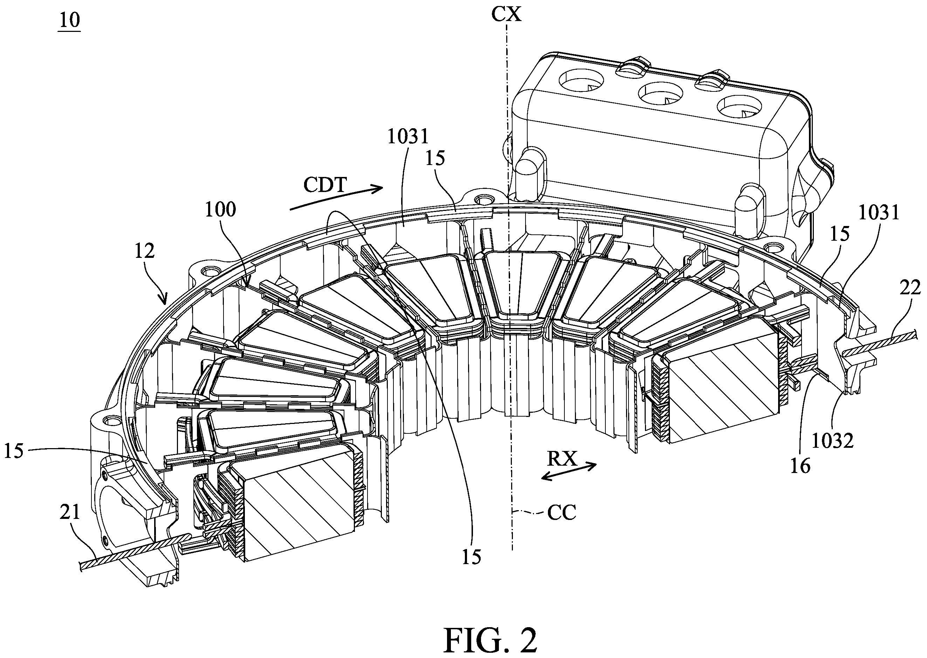

Please refer to FIG. 1 and FIG. 2. The stator mechanism 10 may be, for example, a stator mechanism in an axial flux motor. The axial flux motor may have, for example, a double rotor single stator structure, but it is not limited thereto.

In this embodiment, the stator mechanism 10 may include a housing 12, a first positioning member 13, a second positioning member 14 and a plurality of stator assemblies 100. The housing 12 has a hollow ring-shaped structure, and these stator assemblies 100 are disposed in the housing 12 and are evenly arranged along a circumferential direction CDT of the housing 12.

The housing 12 defines a central axis CX, and the first positioning member 13, the housing 12 and the second positioning member 14 are arranged in sequence along the direction of the central axis CX (or called the axial direction). In this embodiment, the first positioning member 13 and the second positioning member 14 have a disc-shaped structure and can be connected to the upper and lower sides of the housing 12 respectively as shown in the figures.

The first positioning member 13 and the second positioning member 14 are configured to engage with the stator assemblies 100 to enclose the stator assemblies 100 in the housing 12. The specific engagement method will be described in the subsequent paragraphs. In some embodiments, oil can be injected into the closed housing 12, for example, lubricating oil or cooling oil (or coolant) can be input and output through the two conduits 21 and 22 in FIG. 2, and the configuration of the first positioning member 13 and the second positioning member 14 can prevent oil leakage.

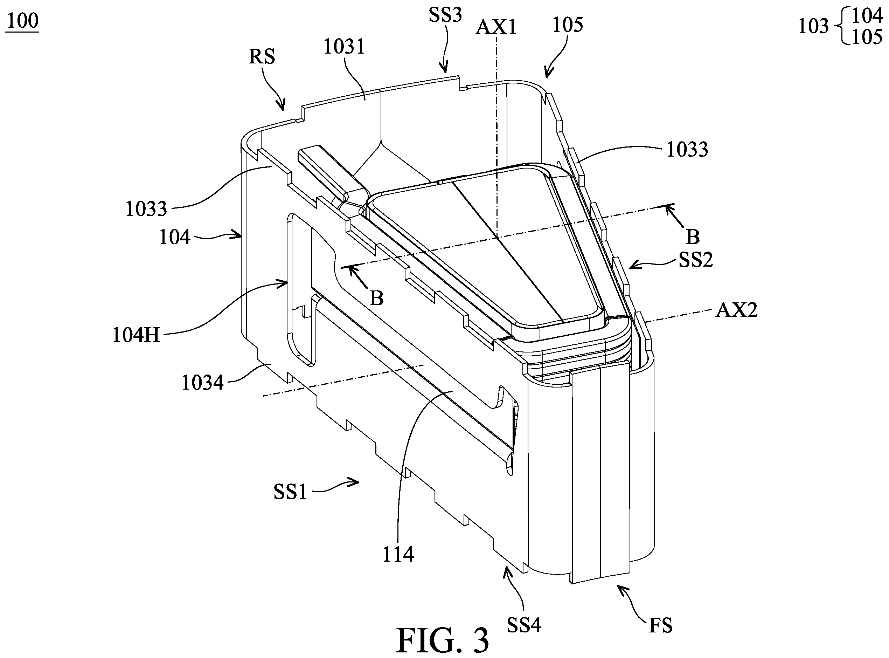

Next, please refer to FIG. 3 to FIG. 5. In this embodiment, each stator assembly 100 has a bracket assembly 103, a core member 108, a first winding assembly 106, a second winding assembly 110, a first insulating element 112, and a second insulating element 114.

In this embodiment, the core member 108 may be made of soft magnetic materials, for example, by stacking multiple layers of silicon steel sheets or by using a powder metallurgy process with soft magnetic materials, but they are not limited thereto.

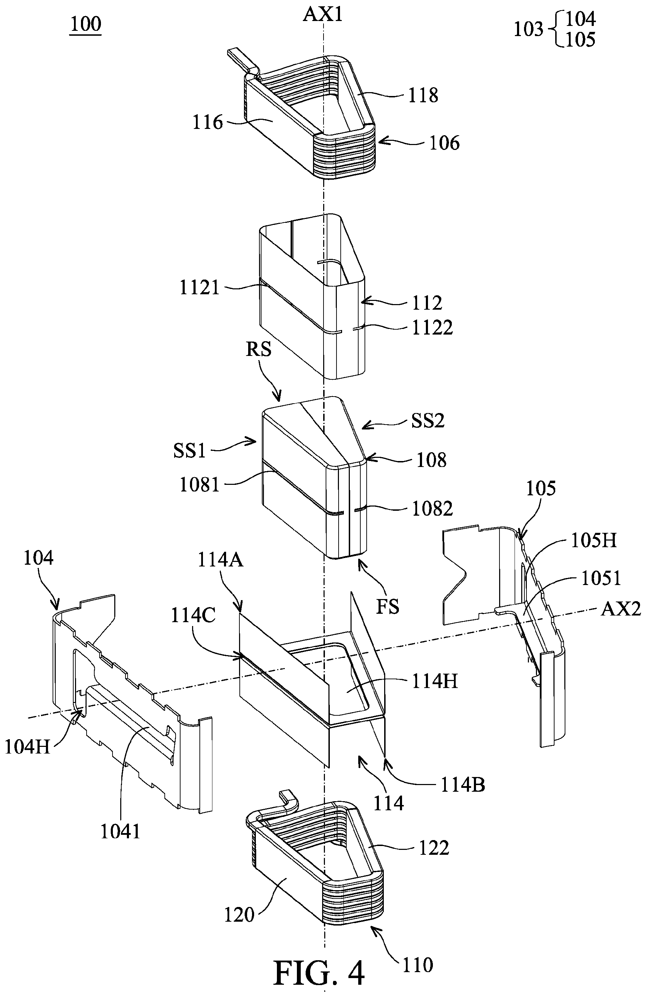

As shown in FIG. 3 and FIG. 4, the core member 108 has a first groove 1081 and a second groove 1082 on both sides along a second axis AX2, and in this embodiment, the first insulating element 112 is sleeved on the core member 108. The first insulating element 112 has a first slot 1121 and a second slot 1122 corresponding to the first groove 1081 and the second groove 1082 respectively. The stator assemblies 100 of this embodiment are arranged along the circumferential direction CDT, and the circumferential direction CDT is substantially the same as the second axis AX2 when observing a single stator assembly 100. However, these directions are only used for illustration and are not limited thereto.

After the first insulating element 112 is sleeved on the core member 108, the second insulating element 114 can be sleeved on the first insulating element 112 and the core member 108 to enhance the insulation effect. Specifically, the second insulating element 114 has an accommodation opening 114H, and the core member 108 and the first insulating element 112 are accommodated in the accommodation opening 114H.

In this embodiment, the bracket assembly 103 may include a first fixed bracket 104 and a second fixed bracket 105. The first fixed bracket 104 is disposed on a first side SS1 of the core member 108, and the second fixed bracket 105 is disposed on a second side SS2 of the core member 108. The first fixed bracket 104 and the second fixed bracket 105 may be made of stainless steel, but they are not limited thereto. The first side SS1 and the second side SS2 are defined along the second axis AX2.

Furthermore, the first fixed bracket 104 is located on the first side SS1 and has a first engaging structure 1041 which is configured to be engaged with the first groove 1081, and the second fixed bracket 105 is located on the second side SS2 and has a second engaging structure 1051 which is configured to be engaged with the second groove 1082.

In addition, as shown in FIG. 4, the second insulating element 114 has a first covering portion 114A (the upper side portion) and a second covering portion 114B (the lower side portion), the first covering portion 114A is movably connected to the second covering portion 114B, and a separating space 114C is formed between the first covering portion 114A and the second covering portion 114B.

The first engaging structure 1041 is configured to pass through the separating space 114C and the first slot 1121 from the first side SS1 and then to be inserted into the first groove 1081, and the second engaging structure 1051 is configured to pass through the separating space 114C and the second slot 1122 from the second side SS2 and then to be inserted into the second groove 1082, so that the first fixed bracket 104 and the second fixed bracket 105 are affixed to the core member 108.

Next, as shown in FIG. 4, the stator assembly 100 may further include a third insulating element 116 and a fourth insulating element 118, which are wound around the first winding assembly 106, and the third insulating element 116 and the fourth insulating element 118 are respectively located on the first side SS1 and the second side SS2.

Similarly, the stator assembly 100 may further include a fifth insulating element 120 and a sixth insulating element 122, which are wound around the second winding assembly 110, and the fifth insulating element 120 and the sixth insulating element 122 are respectively located on the first side SS1 and the second side SS2.

Finally, the first winding assembly 106 can be wound around a third side SS3 of the core member 108, and the second winding assembly 110 can be wound around the fourth side SS4 of the core member 108. Specifically, the first winding assembly 106 and the second winding assembly 110 are arranged along a first axis AX1. The first axis AX1 is parallel to the central axis CX and perpendicular to the second axis AX2. Regarding the configuration of electrical connection, the first winding assembly 106 may be connected to the second winding assembly 110 in parallel, but it is not limited thereto.

Overall, the first side SS1 and the second side SS2 are arranged along the second axis AX2, and the third side SS3 and the fourth side SS4 are arranged along the first axis AX1. Therefore, the first side SS1 or the second side SS2, and the third side SS3 or the fourth side SS4 are respectively arranged along two vertical directions.

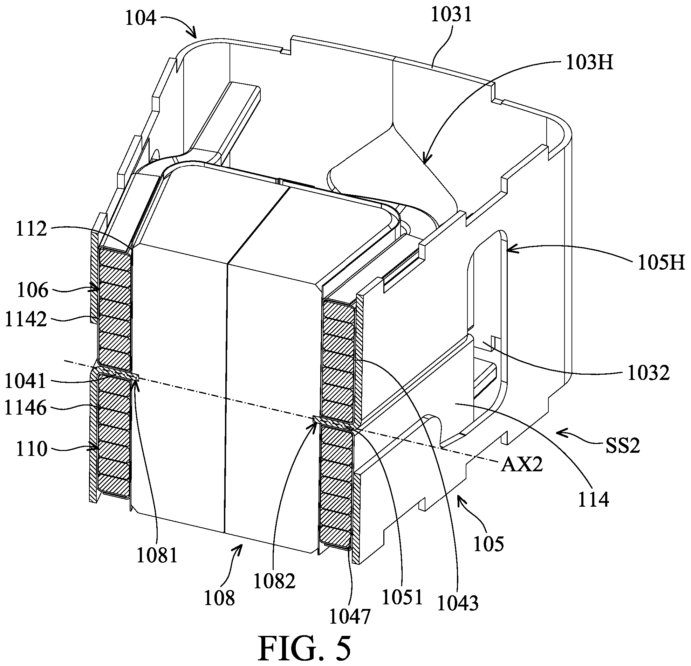

It is worth noting that, as shown in FIG. 5, the first winding assembly 106 and the second winding assembly 110 can be separated by the second insulating element 114 to avoid electrical contact. In addition, based on the configuration of the first engaging structure 1041 and the second engaging structure 1051, the convenience and accuracy of installing the first winding assembly 106 and the second winding assembly 110 on the core member 108 can be increased.

In addition, it should be noted that in some embodiments, the third insulating element 116 to the sixth insulating element 122 can be omitted, but it is not limited thereto. In some other embodiments, the third insulating element 116 and/or the fourth insulating element 118 may cover the entire first winding assembly 106, and the fifth insulating element 120 and/or the sixth insulating element 122 may cover the entire second winding assembly 110, but they are not limited thereto.

Furthermore, as shown in FIG. 3 to FIG. 4, the first fixed bracket 104 is formed with a first opening 104H which is located on the first side SS1, and when viewed along the second axis AX2, as shown in FIG. 3, a portion of the second insulating element 114 is exposed from the first opening 104H. The first axis AX1 is perpendicular to the second axis AX2.

Similarly, as shown in FIG. 4 to FIG. 5, the second fixed bracket 105 is formed with a second opening 105H which is located on the second side SS2, and when viewed along the second axis AX2, another portion of the second insulating element 114 is exposed from the second opening 105H.

In addition, as shown in FIG. 5, when the first fixed bracket 104 is connected to the second fixed bracket 105, the first fixed bracket 104 and the second fixed bracket 105 can cooperatively form a third opening 103H, and the third opening 103H is spatially connected to the first opening 104H and the second opening 105H.

The first opening 104H, the second opening 105H and the third opening 103H can allow the wires connecting the first winding assembly 106 and the second winding assembly 110 to pass through, or can allow other pipelines to pass through (such as the aforementioned conduits 21, 22, and so on). In addition, these openings can also increase the overall heat dissipation effect of the stator mechanism 10.

Please refer to FIG. 4 to FIG. 6. The first engaging structure 1041 may have a first engaging base portion 1042, a first front engaging protruding portion 1043 and a first rear engaging protruding portion 1044, and the first front engaging protruding portion 1043 and the first rear engaging protruding portion 1044 protrude from the first engaging base portion 1042 in a first direction D1 and are configured to engage with a front side FS and a rear side RS of the core member 108.

Similarly, the second engaging structure 1051 may have a second engaging base portion 1052, a second front engaging protruding portion 1053 and a second rear engaging protruding portion 1054, the second front engaging protruding portion 1053 and the second rear engaging protruding portion 1054 protrude from the second engaging base portion 1052 in a second direction D2 and are configured to engage with the front side FS and the rear side RS of the core member 108. The second direction D2 is opposite to the first direction D1, and the second direction D2 and the first direction D1 may be parallel to the second axis AX2.

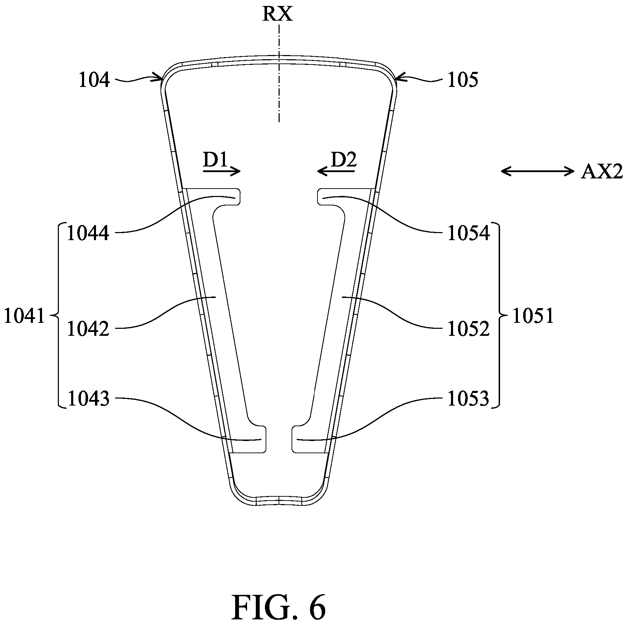

In this embodiment, as shown in FIG. 6, the first fixed bracket 104 and the second fixed bracket 105 can be arranged symmetrically with respect to a central axis CX (for example, located on both sides of a radial direction RX defined by the housing 12), and the remaining components of the stator assembly 100 can also be symmetrical with respect to the radial direction RX, but they are not limited thereto. The radial direction RX is perpendicular to the central axis CX or the first axis AX1.

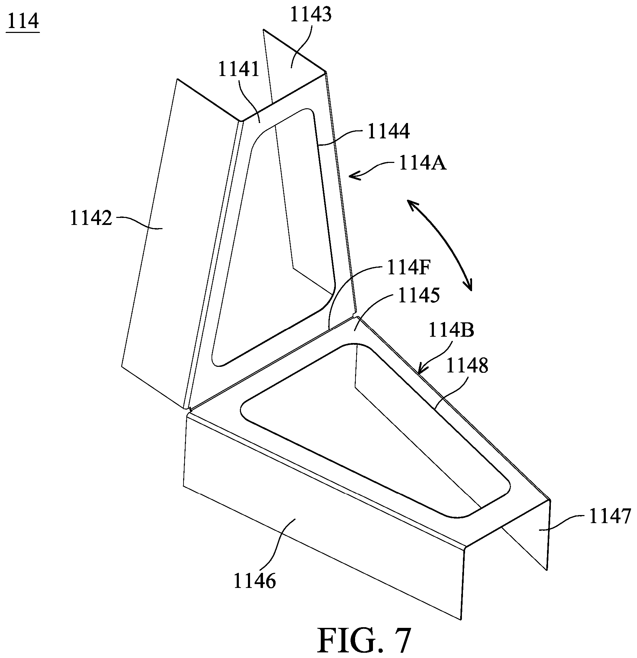

Next, the detailed structure of the second insulating element 114 is described. Please refer to FIG. 4, FIG. 5 and FIG. 7. The first covering portion 114A may be an upper portion, the second covering portion 114B may be a lower portion, and the first covering portion 114A may be rotatable relative to the second covering portion 114B around a folded edge region 114F.

Furthermore, the first covering portion 114A may have a first base portion 1141, a first upper bent portion 1142 and a second upper bent portion 1143. The first upper bent portion 1142 and the second upper bent portion 1143 are formed by folding the first base portion 1141.

As shown in FIG. 5, the first upper bent portion 1142 is disposed between the first fixed bracket 104 and the first winding assembly 106, and the second upper bent portion 1143 is disposed between the second fixed bracket 105 and the first winding assembly 106.

Similarly, the second covering portion 114B may have a second base portion 1145, a first lower bent portion 1146 and a second lower bent portion 1147. The first lower bent portion 1146 and the second lower bent portion 1147 are formed by folding the second base portion 1145.

In addition, the first base portion 1141 has a first sub-opening 1144 and a second sub-opening 1148. When the first covering portion 114A is rotated and stacked on the second covering portion 114B, the first sub-opening 1144 and the second sub-opening 1148 together form the aforementioned accommodation opening 114H, and the gap between the first covering portion 114A and the second covering portion 114B forms the aforementioned separating space 114C.

Furthermore, as shown in FIG. 5, the first lower bent portion 1146 is disposed between the first fixed bracket 104 and the second winding assembly 110, and the second lower bent portion 1147 is disposed between the second fixed bracket 105 and the second winding assembly 110. Based on the design of the plurality of bent portions, it can be further ensured that the first winding assembly 106 and the second winding assembly 110 are not electrically connected to the bracket assembly 103.

]In this embodiment, the first insulating element 112, the second insulating element 114, the third insulating element 116, the fourth insulating element 118, the fifth insulating element 120 and the sixth insulating element 122 can be insulating paper to facilitate processing or folding to protect and insulate the bracket assembly 103, the core member 108, the first winding assembly 106 and the second winding assembly 110.

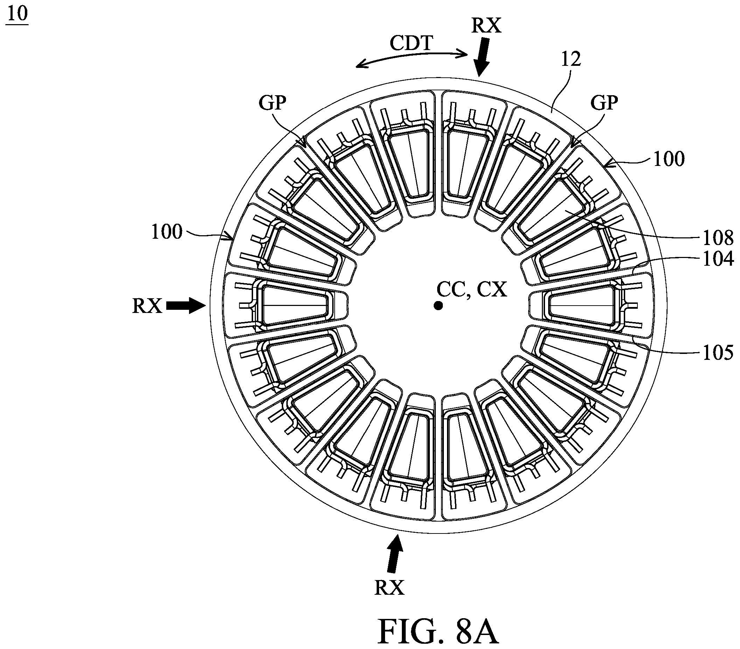

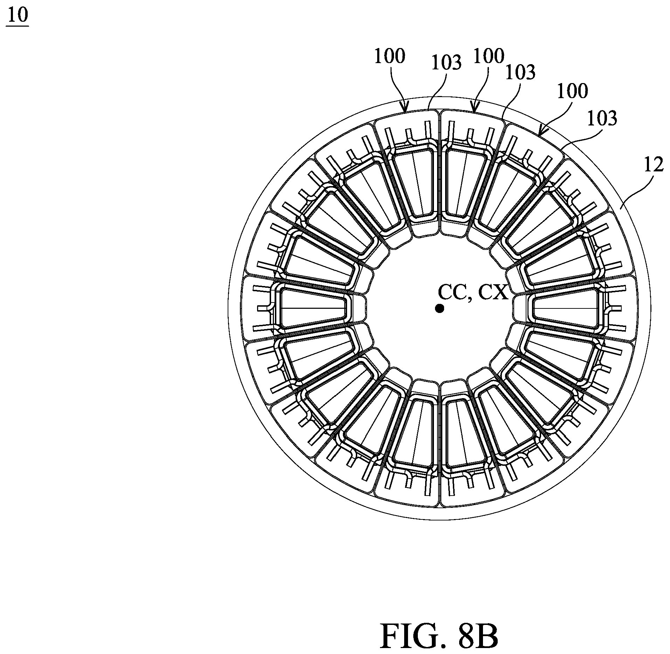

Next, please refer to FIG. 2, FIG. 8A and FIG. 8B. In this embodiment, after the preliminary assembly of the housing 12, a thermal shrink fitting (that is, heating to reduce the diameter of the housing12) may be performed to position the aforementioned multiple stator assemblies 100.

As shown in FIG. 8A, when viewed along the first axis AX1 or the central axis CX, the core member 108 may have a fan-shaped structure. Therefore, the stator assembly 100 as a whole also has a fan-shaped structure. In the present disclosure, when viewed along the first axis AX1 or the central axis CX, the angle formed between the first fixed bracket 104 and the second fixed bracket 105 may be between 15 degrees and 120 degrees, but it is not limited thereto.

As shown in FIG. 8A, before the thermal shrink fitting process is performed to the housing 12, the stator assemblies 100 can be evenly arranged in the housing 12 along the circumferential direction CDT, such as being arranged by using a tool. There is a gap GP between each stator assembly 100 and another adjacent stator assembly 100 along the circumferential direction CDT, and the distance of each gap GP is substantially equal.

Next, as shown in FIG. 8A and FIG. 8B, after the thermal shrink fitting process is performed to the housing 12, the housing 12 will uniformly shrink toward a center of the circle CC of the housing 12 to drive the stator assemblies 100 to move toward the center of the circle CC along their respective radial directions RX and then move toward each other. Therefore, as shown in FIG. 8B, the bracket assembly 103 of each of the stator assemblies 100 is in contact with the other two adjacent bracket assemblies 103.

When these bracket assemblies 103 are in contact with each other, because the bracket assemblies 103 are made of metal material, a greater friction force will be generated between each bracket assembly 103 and the other two adjacent bracket assemblies 103 along the circumferential direction CDT, so that these stator assemblies 100 can be secured in the position shown in FIG. 8B without moving freely.

It is worth noting that because the housing 12 of the present disclosure can uniformly shrink toward the center of the circle CC, the displacement of each stator assembly 100 toward the center of the circle CC is also substantially equal, so that these stator assemblies 100 can be accurately positioned in the position shown in FIG. 8B.

Furthermore, in order to prevent these stator assemblies 100 from moving along the direction of the central axis CX, a plurality of stopping structures may be formed on the housing 12 to further position these stator assemblies 100. Please return to FIG. 1 to FIG. 3, and FIG. 5. In this embodiment, the central axis CX of the housing 12 passes through the center of the circle CC, and the bracket assembly 103 may be formed with a first stopping portion 1031 and a second stopping portion 1032 extending along the central axis CX.

Correspondingly, as shown in FIG. 2, a plurality of third stopping portions 15 and a plurality of fourth stopping portions 16 are formed on the housing 12, respectively corresponding to the first stopping portions 1031 and the second stopping portions 1032, to limit the positions of the stator assemblies 100. That is, these stator assemblies 100 are constrained and cannot move along the central axis CX.

Specifically, the first stopping portion 1031 is engaged between two adjacent third stopping portions 15, and the second stopping portion 1032 is engaged between two adjacent fourth stopping portions 16, but they are not limited thereto.

Furthermore, as shown in FIG. 3, the bracket assembly 103 may further include a plurality of first positioning portions 1033 and a plurality of second positioning portions 1034 extending along the direction of the central axis CX (or the first axis AX1). Correspondingly, as shown in FIG. 1, the first positioning member 13 and the second positioning member 14 are configured to position the stator assemblies 100 by engaging with the first positioning portions 1033 and the second positioning portions 1034, respectively.

Specifically, a plurality of third positioning portions 13P are formed on the first positioning member 13, and are configured to be coupled to the first positioning portions 1033. In addition, a plurality of fourth positioning portions 14P are formed on the second positioning member 14, and are configured to be coupled to the second positioning portions 1034.

The third positioning portion 13P and the fourth positioning portion 14P may be corresponding groove structures, and the first positioning portion 1033 and the second positioning portion 1034 may be protrusion structures to engage with the corresponding third positioning portion 13P and the fourth positioning portion 14P. The implementation manner of the positioning portions is not limited thereto. For example, in other embodiments, the positions of the protrusion structures and the groove structures are interchangeable.

In summary, the present disclosure provides a stator mechanism 10, including a housing 12 and a plurality of stator assemblies 100. The stator assemblies 100 are disposed in the housing 12 and arranged along the circumferential direction CDT of the ring-shaped housing 12. Each stator assembly 100 may have a core member 108 and a bracket assembly 103. The core member 108 may be made of soft magnetic material and has a first groove 1081 and a second groove 1082. The bracket assembly 103 includes a first fixed bracket 104 and a second fixed bracket 105, respectively having a first engaging structure 1041 and a second engaging structure 1051 which are configured to be respectively engaged with the first groove 1081 and the second groove 1082 so as to fix the core member 108.

Furthermore, the stator assembly 100 further includes a first insulating element 112 and a second insulating element 114. The first insulating element 112 is sleeved on the core member 108, and the second insulating element 114 is sleeved on the first insulating element 112 and the core member 108. Therefore, when the first winding assembly 106 and the second winding assembly 110 are disposed on the core member 108, the first winding assembly 106 and the second winding assembly 110 may be insulated from the bracket assembly 103, and the first winding assembly 106 may also be prevented from directly contacting the second winding assembly 110.

In addition, because the stator assemblies 100 each have a fan-shaped structure and are close to each other, when the ring-shaped housing 12 is heated and shrunk, each stator assembly 100 moves toward the center of the circle CC of the housing 12 and contacts the other two adjacent stator assemblies 100. Because the bracket assemblies 103 of the stator assemblies 100 may be made of metal, the friction between the stator assemblies 100 is relatively high, so that after the stator assemblies 100 come into contact with the adjacent stator assemblies 100, the stator assemblies 100 can be firmly positioned due to the friction.

Although the embodiments and their advantages have been described in detail, it should be understood that various changes, substitutions, and alterations can be made herein without departing from the spirit and scope of the embodiments as defined by the appended claims. Moreover, the scope of the present application is not intended to be limited to the particular embodiments of the process, machine, manufacture, composition of matter, means, methods, and steps described in the specification. As one of ordinary skill in the art will readily appreciate from the disclosure, processes, machines, manufacture, compositions of matter, means, methods, or steps, presently existing or later to be developed, that perform substantially the same function or achieve substantially the same result as the corresponding embodiments described herein can be utilized according to the disclosure. Accordingly, the appended claims are intended to include within their scope such processes, machines, manufacture, compositions of matter, means, methods, or steps. In addition, each claim constitutes a separate embodiment, and the combination of various claims and embodiments are within the scope of the disclosure.

## Claims

1. A stator assembly, comprising:
a core member (108), having a first groove (1081) and a second groove (1082);
a bracket assembly (103), comprising:
a first fixed bracket (104), disposed on a first side (SS1) of the core member (108) and having a first engaging structure (1041) that engages with the first groove (1081); and
a second fixed bracket (105), disposed on a second side (SS2) of the core member (108) and having a second engaging structure (1051) that engages with the second groove (1082);
a first winding assembly (106), wound around a third side (SS3) of the core member (108); and
a second winding assembly (110), wound around a fourth side (SS4) of the core member (108);
wherein the first winding assembly (106) and the second winding assembly (110) are arranged along a first axis (AX1).

2. The stator assembly as claimed in claim 1, further comprising a first insulating element (112), which is sleeved on the core member (108) and has a first slot (1121) and a second slot (1122), which respectively correspond to the first groove (1081) and the second groove (1082);
wherein the stator assembly (100) further comprises a second insulating element (114), which is sleeved on the first insulating element (112) and the core member (108) and has a first covering portion (114A) and a second covering portion (114B), wherein the first covering portion (114A) is movably connected to the second covering portion (114B), and a separating space (114C) is formed between the first covering portion (114A) and the second covering portion (114B).

3. The stator assembly as claimed in claim 2, wherein the first engaging structure (1041) is configured to pass through the separating space (114C) and the first slot (1121) and then to be inserted into the first groove (1081), and the second engaging structure (1051) is configured to pass through the separating space (114C) and the second slot (1122) and then to be inserted into the second groove (1182).

4. The stator assembly as claimed in claim 2, wherein the first covering portion (114A) has a first upper bent portion (1142) and a second upper bent portion (1143), the first upper bent portion (1142) is disposed between the first fixed bracket (104) and the first winding assembly (106), and the second upper bent portion (1143) is disposed between the second fixed bracket (105) and the first winding assembly (106);
wherein the second covering portion (114B) has a first lower bent portion (1146) and a second lower bent portion (1147), the first lower bent portion (1146) is disposed between the first fixed bracket (104) and the second winding assembly (110), and the second lower bent portion (1147) is disposed between the second fixed bracket (105) and the second winding assembly (110).

5. The stator assembly as claimed in claim 2, further comprising:
a third insulating element (116) and a fourth insulating element (118), wound around the first winding assembly (106); and
a fifth insulating element (120) and a sixth insulating element (122), wound around the second winding assembly (110),
wherein the third insulating element (116) and the fourth insulating element (118) are respectively located on the first side (SS1) and the second side (SS2), and the fifth insulating element (120) and the sixth insulating element (122) are respectively located on the first side (SS1) and the second side (SS2).

6. The stator assembly as claimed in claim 1, wherein the third side (SS3) and the fourth side (SS4) are arranged opposite to each other along the first axis (AX1), the first side (SS1) and the second side (SS2) are arranged along a second axis (AX2), and the first axis (AX1) is perpendicular to the second axis (AX2).

7. The stator assembly as claimed in claim 2, wherein the first fixed bracket (104) is formed with a first opening (104H) which is located on the first side (SS1), and when viewed along a second axis (AX2), a portion of the second insulating element (114) is exposed from the first opening (104H), wherein the first axis (AX1) is perpendicular to a second axis (AX2);
wherein the second fixed bracket (105) is formed with a second opening (105H) which is located on the second side (SS2), and when viewed along the second axis (AX2), another portion of the second insulating element (114) is exposed from the second opening (105H);
wherein the first fixed bracket (104) and the second fixed bracket (105) cooperatively form a third opening (103H), and the third opening (103H) is connected to the first opening (104H) and the second opening (105H).

8. The stator assembly as claimed in claim 1, wherein the first engaging structure (1041) includes a first engaging base portion (1042), a first front engaging protruding portion (1043) and a first rear engaging protruding portion (1044), and the first front engaging protruding portion (1043) and the first rear engaging protruding portion (1044) protrude from the first engaging base portion (1042) in a first direction (D1) and are configured to be engaged with a front side (FS) and a rear side (RS) of the core member (108).

9. The stator assembly as claimed in claim 8, wherein the second engaging structure (1051) has a second engaging base portion (1052), a second front engaging protruding portion (1053) and a second rear engaging protruding portion (1054), and the second front engaging protruding portion (1053) and the second rear engaging protruding portion (1054) protrude from the second engaging base portion (1052) in a second direction (D2) and are configured to be engaged with the front side (FS) and the rear side (RS) of the core member (108), wherein the second direction (D2) is opposite to the first direction (D1).

10. A stator mechanism comprising the stator assembly (100) as claimed in claim 1, further comprising:
a housing (12), having a ring-shaped structure; and
a plurality of the stator assemblies (100), disposed in the housing (12) and arranged along a circumferential direction of the housing (12), close to each other.

11. The stator mechanism as claimed in claim 10, wherein the housing (12) defines a central axis (CX), the bracket assembly (103) includes a first stopping portion (1031) and a second stopping portion (1032), extending along the direction of the central axis (CX), wherein the housing (12) further includes a plurality of third stopping portions (15) and a plurality of fourth stopping portions (16), respectively corresponding to the first stopping portions (1031) and the second stopping portions (1032), to limit the positions of the stator assemblies (100).

12. The stator mechanism as claimed in claim 11, further comprising a first positioning member (13) and a second positioning member (14), wherein the bracket assembly (103) further includes a plurality of first positioning portions (1033) and a plurality of second positioning portions (1034) extending along the direction of the central axis (CX), wherein the first positioning member (13) and the second positioning member (14) are configured to position the stator assemblies (100) by engaging with the first positioning portions (1033) and the second positioning portions (1034).

13. The stator mechanism as claimed in claim 12, wherein the first positioning member (13) further includes a plurality of third positioning portions (13P) configured to be coupled to the first positioning portions (1033), and the second positioning member (14) further includes a plurality of fourth positioning portions (14P) configured to be coupled to the second positioning portions (1034).

14. The stator mechanism as claimed in claim 10, wherein the thermal shrink fitting process is performed to the housing (12), the stator assemblies (100) are evenly arranged in the housing (12) along the circumferential direction, and there is a gap (GP) between each stator assembly (100) and another adjacent stator assembly (100);
wherein after the thermal shrink fitting process is performed to the housing (12), the housing (12) shrinks toward a center (CC) of a circle of the housing (12) to drive the stator assemblies (100) to move toward the center (CC) of the circle so that each of the bracket assemblies (103) is in contact with the other two adjacent bracket assemblies (103).

15. The stator mechanism as claimed in claim 10, wherein the first fixed bracket (104) and the second fixed bracket (105) are detachably fixed to the first side (SS1) and the second side (SS2) of the core member (108), respectively.
